# EUROPEAN PATENT SPECIFICATION

(11) **EP 1 745 957 B1**
(45) Date of publication and mention of the grant of the patent: **29.10.2008**
(21) Application number: 05106565.4
(22) Date of filing: 18.07.2005
(51) Int. Cl.: B60J 5/04, B62D 21/10

(54) **Vehicle door opening system**
Türöffnungs- und -schliesssystem für Fahrzeuge
Système pour ouvrir/fermer une porte de véhicule

(43) Date of publication of application: 24.01.2007
(73) Proprietor: GM Global Technology Operations, Inc., Detroit, MI 48265-3000 (US)
(72) Inventor: Geyrhofer, Mattias, 412 66, Göteborg (SE); Verhée, Patrick, 411 08, Göteborg (SE); Daniel, Alex, 411 20, Göteborg (SE)
(74) Representative: Lind, Urban Arvid Oskar

(56) References cited:
- FR-A- 872 026
- US-A- 2 656 214
- US-A- 2 921 812
- US-A- 3 693 997
- US-A- 5 806 622

## Description

### Field of the Invention

The invention relates to a wheeled automotive vehicle having, a vehicle body structure providing a driver compartment and comprising an opening into the compartment, a central body cooperatively dimensioned and configured to close said opening, said opening being formed by portions of the body structure.

### Technical Background

Crowded urban environment provides a need for more efficient use of parking spaces. Non-conventional door closures for wheeled automotive vehicles have been experimented with for many years, showing up in speciality cars and prototypes.

With conventional doors that swing out from the vehicle around a substantially vertical axis the length of the door must be minimized to reduce its outward trajectory when opened. In addition to making egress and access to the front seat a bit more complicated since the opening into the wheeled automotive vehicle is reduced these type of doors also requires that one enter from one direction, normally from the rear of the vehicle. Everyone, familiar with conventional automotive vehicles are well aware of the issue with swinging in and out doors in order to pass an open door and enter from the intended direction (i.e. from the rear).

A further issue with doors of conventional type is the potential hazard when the door is dangerously swinged out into, motor, bicycle or pedestrian traffic during a stop by a side of the road or street.

US 6,676,193 B1 of Hanagan shows a compact vehicle with an upwardly opening side door. However, it is realized that the degree of opening during normal operation is low, making it difficult for people to access and egress. It is anticipated that there is a need for improvement of automobile doors for wheeled vehicles, such as for sedans, vans, trucks and other automobiles, and the issues of easy access as well as safe and comfortable opening needs to be further addressed.

US 2,921,812 (closest prior art) of Barenyi discloses a vehicle having a central section consisting of side wall sections, an upper bridge section and a "hood", confining the passengers space at the top. The central section is a rigid structure. Moreover, the body of the car comprises a front section enclosing the front wheels, a rear section enclosing the rear wheels and wherein the front and rear sections are joined by a girder and floor section and adapted to fit the central section in between. According to one embodiment the central section, forming a "cap", is hinged to the rear edge of the front section. The opening degree at the sides is similar to that of US 6,676,193 B1 previously discussed. In order to increase the opening degree by the sides, with the purpose of facilitating access and egress of the vehicle, Barenyi discloses a second embodiment in which the "cap" is hinged at the front edge of said front section by lateral bars. The lateral bars extending lengthwise of the body at the outside thereof, such bars being pivotally connected to said front section. However, it may not be desirable to have lateral bars provided on the outside of the vehicle body and the issue of tolerances when fitting the rigid structure of the central section in a closed condition remains.

### Summary of the Invention

In addition to provide for a comfortable access and egress of a vehicle it is an object to provide a vehicle door opening system that enables an accurate opening degree and capable of meeting the issue of tolerances.

It is a more general object of the invention to provide a vehicle that requires a minimal amount of space beside the entry door for passenger access or egress.

It is still a further object of the invention to provide for a vehicle door opening system configured to handle tolerances.

These and other objects are achieved by a according to independent claim 1 and a method according to independent claim 9. Preferred embodiments of the invention are defined in the dependent claims.

According to the invention there is provided a wheeled automotive vehicle having, a vehicle body structure providing a driver compartment and comprising an opening into the compartment, a central body cooperatively dimensioned and configured to close said opening, said opening being formed by portions of the body structure. Said central body comprising a side panel articulately arranged to portions of said central body by the opening along a lengthwise propagation of said vehicle body structure, and said central body being pivotally arranged relative to an axis propagating in the transverse direction of said vehicle body structure for enabling pivotal movement upwards and away from said opening during opening movement.

By combining these two moves an increased opening degree is accomplished together with a high flexibility , allowing for adjustments of the position of the central body thus reducing the issue of potential tolerances. Furthermore, the opening is easy accessible from rear and front when approaching the vehicle as well as entering the vehicle.

Preferably, the articulate side panel has an inside surface arranged to follow an outside surface of said central body in facing relationship during part of opening movement. Thus, the entire central body inside is protected from rain, snow and other environmental impact during opening and in its opened condition. Furthermore, the increased area, covering the top of the vehicle from above during opening and in its open condition, works like a cover for the interior of the vehicle in some rainy and/or snowy conditions. Furthermore, the close following of the movable side panel in relation to the central body outer surface reduces the risk of e.g. interfering with traffic from the behind during opening by the side of a road or street.

Advantageously, the articulate side panel is pivotally attached to a tap arrangement, said tap arrangement in turn being pivotally attached to said central body. This arrangement provides for a robust and reliable movement of the central body during opening and closing. By lifting the side panel using a double articulated device an increased opening degree as well as increased margins relative to the sides of the front body of the vehicle during the following pivoting movement is accomplished. The articulate side panel is pivotally attached via a tap arrangement to a beam structure underneath a side window of said central body. The central body comprising a roof portion and one side panel on each side of said roof portion, said each one side panel forming a door-like structure.

Preferably, the central body is pivotally attached by the rear part of a front hood of the vehicle below the front window of said central body. Advantageously, said central body is held by biasing means in its closed condition in order to support opening movement. Alternatively, the opening movement of said central body is powered by an electric motor or hydraulic gear. It is desirable to achieve a smooth and comfortable opening operation of the vehicle.

Accordingly, there is also according to the invention provided a method for opening a vehicle body structure providing a driver compartment and comprising an opening into the compartment, a central body cooperatively dimensioned and configured to close said opening, said opening being formed by portions of the body structure. The method comprises the steps of manoeuvring a side panel articulately arranged to portions of said central body by the opening along a lengthwise propagation of said vehicle body structure, and pivoting said central body relative to an axis propagating in the transverse direction of said vehicle body structure for enabling pivotal movement upwards and away from said opening during opening movement.

Preferably, said central body is pivotally attached by the rear part of a front hood of the vehicle below the front window of said central body and pivotal movement of said central body is initiated when said side panels are in their fully lifted position.

### Brief Description of the Drawings

A currently preferred embodiment of the present invention will now be described in more detail, with reference to the accompanying drawings.

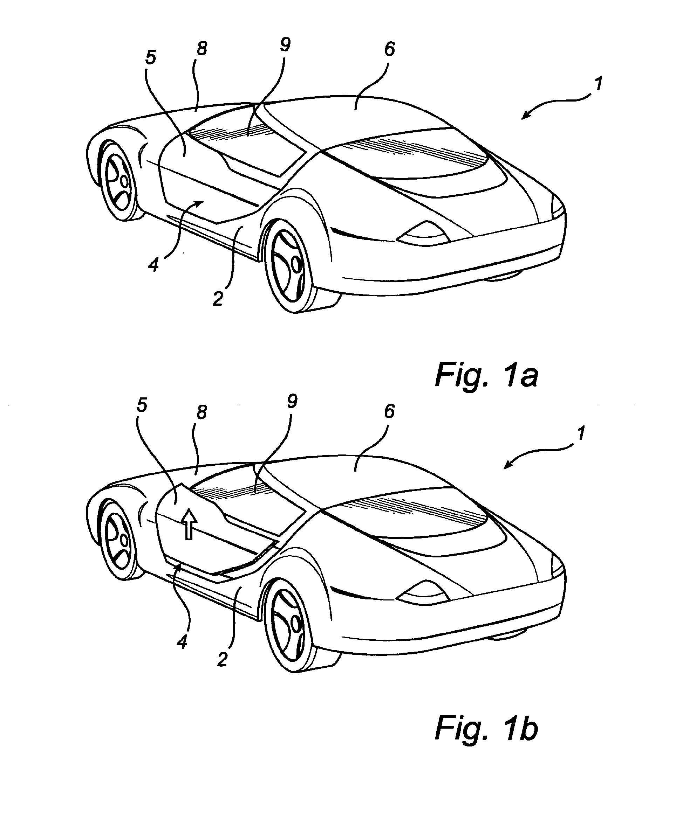

Figs. 1a-1f present schematically in perspective view an opening sequence of a wheeled automotive vehicle provided with a door opening system according to an embodiment of the invention, wherein,
Fig. 1a discloses the vehicle door opening system in a closed condition,
Fig. 1b discloses an initial movement of the door panel,

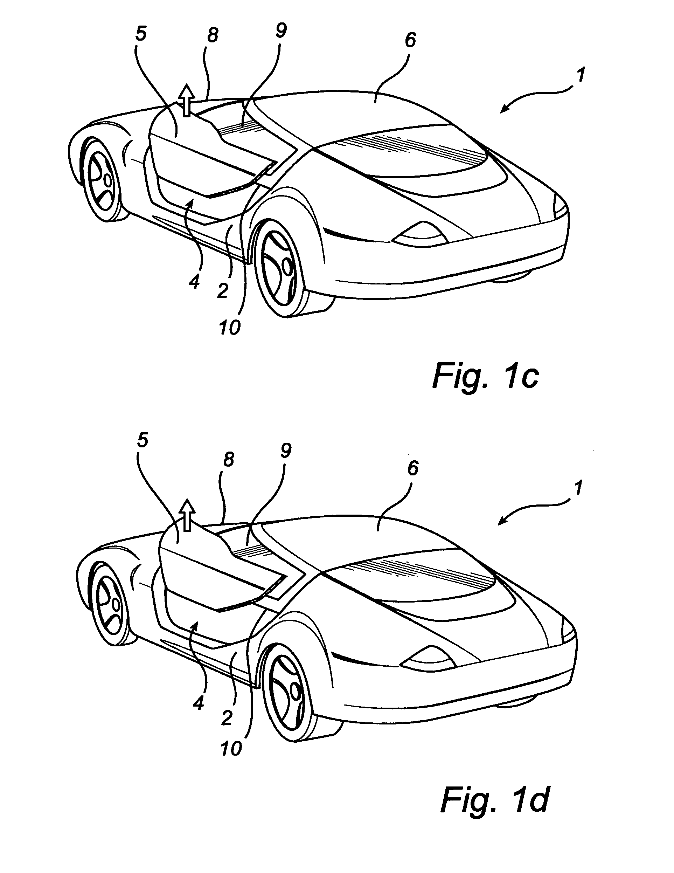

Fig. 1c presents the continuing movement of the door panel during opening,
Fig. 1d presents the door panel in its fully open condition according to a preferred embodiment,

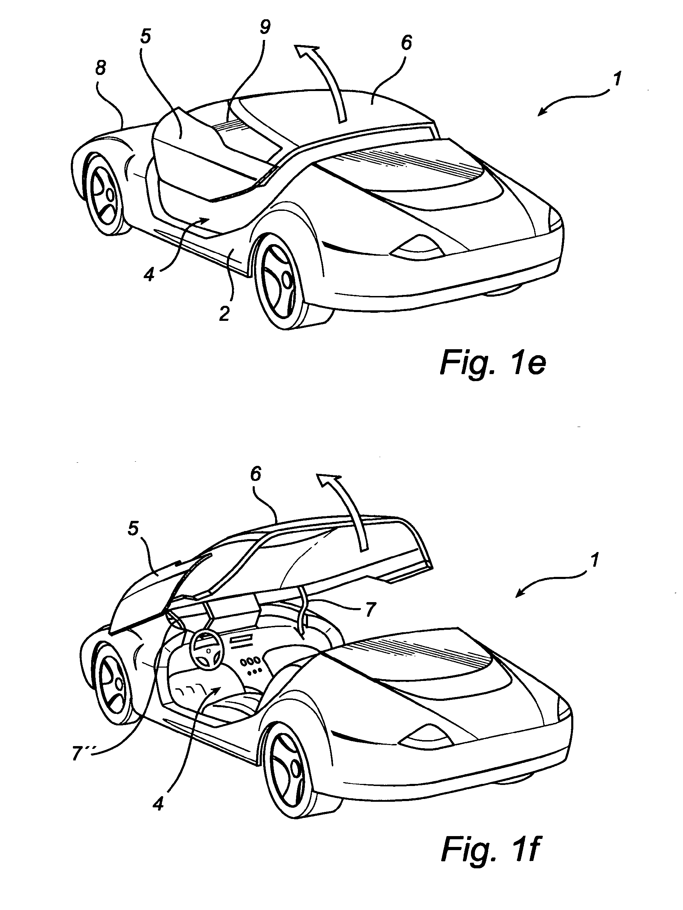

Fig. 1e discloses the further opening sequence of pivoting a central section of said vehicle during opening,
Fig. 1f discloses a vehicle according to a preferred embodiment in an opened condition.

### Detailed Description of a Preferred Embodiment

A first embodiment of the invention related to a wheeled automotive vehicle will be described in more detail in the following with reference to the accompanying drawings.
Referring now to Fig. 1a, where a car 1 is disclosed with a body structure 2. The body structure 2 provides a driver compartment 3. An opening 4 into the compartment 3 is covered by a door 9 cooperatively dimensioned and configured to close said opening 4. A central body comprising a roof portion 6 and one side panel 5 on each side of said roof portion 6, said each one side panel 5 forming a door-like structure. The central body comprising a side panel 5 articulately arranged to portions of said central body by the opening 4 along a lengthwise propagation of said vehicle body structure 2.

In fig. 1b it is disclosed what happens in the initial stage during opening. The side panel 5 has an inside surface arranged to follow an outside surface of said central body in facing relationship during the first stage of opening movement. The articulate side panel 5 is pivotally attached to a tap arrangement, said tap arrangement in turn being pivotally attached to said central body. The articulate side panel 5 is pivotally attached via a tap arrangement to a beam structure 10 underneath a side window 9 of said central body.

Referring further to fig. 1d where the continuing upward articulated movement of the side panel 5 is disclosed. The side panel 5 follows the tumblehome of the vehicle, thus covering the opening from above without projecting to much outside the main body.

In fig. 1d the side panel has reached its top position and the next movement is about to follow. The front side of the side panel 5 is in a position with sufficient clearance in relation to the vehicle body and especially the side of the hub in order to avoid obstruction in the following pivoting movement. The side panel 5 is covering part of the side window 9 which is held in position by the lower beam 10.
Referring now to fig. 1e in which pivoting movement of the central body relative to an axis propagating in the transverse direction of said vehicle body structure is following. The pivoting arrangement enables pivotal movement of the central body upwards and away from said opening 4 and towards the hood during opening movement. The central body is pivotally attached by the rear part of the front hood 8 of the vehicle 1 below the front window of said central body. In order to enable a smooth and comfortable opening sequence of said central body it is held by biasing means (not shown) in its closed condition in order to support opening movement. When activating the movement the biasing means are performing the whole opening sequence. Alternatively, the opening movement of said central body is powered by an electric motor or hydraulic gear.

During closing the movement is reversed to the above described and works together with the force of gravity such that it will be easy to control. Preferably, the actuation oc opening and closing is performed by a command signal, e.g from a button on apanel, a remote key or key FOB.

In fig. 6 the vehicle according to a currently preferred embodiment is disclosed in an opened condition. Although disclosed by a currently preferred embodiment it is submitted that the skilled person may readily adapt the vehicle such that the pivoting movement of the central body is performed about a transverse axis located at the rear body of the vehicle. In such a case the pivoting movement will result in an open position of the vehicle with the roof of the central body sloping rearwards.

## Claims

1. A wheeled automotive vehicle (1) having,
a vehicle body structure (2) providing a driver compartment (3) and comprising an opening (4) into the compartment,
a central body cooperatively dimensioned and configured to close said opening (4), said opening (4) being formed by portions of the body structure (2),
**characterised in that**
said central body comprising a side panel (5) articulately arranged to portions of said central body by the opening (4) along a lengthwise propagation of said vehicle body structure (2), and
said central body being pivotally arranged relative to an axis propagating in the transverse direction of said vehicle body structure for enabling pivotal movement upwards and away from said opening (4) during opening movement.

2. The vehicle (1) according to claim 1, in which vehicle said articulate side panel (5) has an inside surface arranged to follow an outside surface of said central body in facing relationship during part of opening movement.

3. The vehicle (1) according to any one of claims 1-2, in which vehicle (1) said articulate side panel (5) is pivotally attached to a tap arrangement, said tap arrangement in turn being pivotally attached to said central body.

4. The vehicle (1) according to any one of claims 1-3, in which vehicle (1) said articulate side panel (5) is pivotally attached via a tap arrangement to a beam structure (10) underneath a side window (9) of said central body.

5. The vehicle (1) according to any one of claims 1-4, in which vehicle (1) said central body comprising a roof portion (6) and one side panel (5) on each side of said roof portion (6), said each one side panel (5) forming a door-like structure.

6. The vehicle (1) according to any one of claims 1-5, in which vehicle (1) said central body is pivotally attached by the rear part of a front hood (8) of the vehicle (1) below the front window of said central body.

7. The vehicle (1) according to any one of claims 1-6, in which vehicle (1) said central body is held by biasing means in its closed condition in order to support opening movement.

8. The vehicle (1) according to any one of claims 1-7, in which vehicle (1) the opening movement of said central body is powered by an electric motor or hydraulic gear.

9. Method for opening a wheeled automotive vehicle (1) having, a vehicle body structure (2) providing a driver compartment (3) and comprising an opening (4) into the compartment,
a central body cooperatively dimensioned and configured to close said opening (4), said opening (4) being formed by portions of the body structure (2),
**characterised by** the steps of
manoeuvring a side panel (5) articulately arranged to portions of said central body by the opening (4) along a lengthwise propagation of said vehicle body structure (2), and
pivoting said central body relative to an axis propagating in the transverse direction of said vehicle body structure for enabling pivotal movement upwards and away from said opening (4) during opening movement.

10. The method according to claim 9, in which said central body is pivotally attached by the rear part of a front hood (8) of the vehicle (1) below the front window of said central body and pivotal movement of said central body is initiated when said side panels (5) are in their fully lifted position.

## Patentansprüche

1. Kraftfahrzeug mit Rädern (1) mit
einer Fahrzeugkörperkonstruktion (2), die ein Fahrerabteil (3) bereitstellt und eine Öffnung in das Abteil hinein umfasst,
einem Mittelkörper, der im Verbund bemessen und eingerichtet ist, die Öffnung (4) zu verschließen, wobei die Öffnung (4) durch Abschnitte der Körperkonstruktion (2) ausgebildet wird,
**dadurch gekennzeichnet, dass**
der Mittelkörper eine Seitenwand (5) umfasst, die an der Öffnung (4) gelenkgestützt an Abschnitten des Mittelkörpers entlang einer Längsausdehnung der Fahrzeugkörperkonstruktion (2) angeordnet ist, und
der Mittelkörper schwenkbar bezüglich einer Achse angeordnet ist, die sich in der Querrichtung der Fahrzeugkörperkonstruktion erstreckt, um während der Öffnungsbewegung eine Schwenkbewegung nach oben und von der Öffnung (4) weg zu ermöglichen.

2. Fahrzeug (1) nach Anspruch 1, wobei die gelenkgestützte Seitenwand (5) des Fahrzeugs eine Innenfläche aufweist, die angeordnet ist, dass sie während eines Teils der Öffnungsbewegung einer Außenfläche des Mittelkörpers in einer Gegenüberstellungsbeziehung folgt.

3. Fahrzeug (1) nach einem der Ansprüche 1 - 2, wobei die gelenkgestützte Seitenwand (5) des Fahrzeugs (1) schwenkbar an einer Abzweigungsanordnung angebracht ist, wobei die Abzweigungsanordnung ihrerseits schwenkbar am Mittelkörper angebracht ist.

4. Fahrzeug (1) nach einem der Ansprüche 1 - 3, wobei die gelenkgestützte Seitenwand (5) des Fahrzeugs (1) über eine Abzweigungsanordnung schwenkbar an einer Trägerkonstruktion (10) unterhalb eines Seitenfensters (9) des Mittelkörpers angebracht ist.

5. Fahrzeug (1) nach einem der Ansprüche 1 - 4, wobei der Mittelkörper des Fahrzeugs (1) einen Dachabschnitt (6) und eine Seitenwand (5) auf jeder Seite des Dachabschnittes (6) umfasst, wobei eine jede Seitenwand (5) eine türähnliche Konstruktion ausbildet.

6. Fahrzeug (1) nach einem der Ansprüche 1 - 5, wobei der Mittelkörper des Fahrzeugs (1) am hinteren Teil einer Vorderhaube (8) des Fahrzeugs (1) unterhalb der Frontscheibe des Mittelkörpers schwenkbar angebracht ist.

7. Fahrzeug (1) nach einem der Ansprüche 1 - 6, wobei der Mittelkörper des Fahrzeugs (1) durch Vorspannmittel in seinem geschlossenen Zustand gehalten wird, um die Öffnungsbewegung abzustützen.

8. Fahrzeug (1) nach einem der Ansprüche 1 - 7, wobei die Öffnungsbewegung des Mittelkörpers des Fahrzeugs (1) durch einen Elektromotor oder ein Hydraulikgetriebe angetrieben wird.

9. Verfahren zum Öffnen eines Kraftfahrzeugs mit Rädern (1) mit
einer Fahrzeugkörperkonstruktion (2), die ein Fahrerabteil (3) bereitstellt und eine Öffnung (4) in das Abteil hinein umfasst,
einem Mittelkörper, der im Verbund bemessen und eingerichtet ist, die Öffnung (4) zu verschließen, wobei die Öffnung (4) durch Abschnitte der Körperkonstruktion (2) ausgebildet wird,
**gekennzeichnet durch** die Schritte zum
Bewegen einer Seitenwand (5), die an der Öffnung (4) gelenkgestützt an Abschnitten des Mittelkörpers entlang einer Längsausdehnung der Fahrzeugkörperkonstruktion (2) angeordnet ist, und zum
Schwenken des Mittelkörpers bezüglich einer Achse, die sich in der Querrichtung der Fahrzeugkörperkonstruktion erstreckt, um während der Öffnungsbewegung eine Schwenkbewegung nach oben und von der Öffnung (4) weg zu ermöglichen.

10. Verfahren nach Anspruch 9, wobei der Mittelkörper schwenkbar am hinteren Teil einer Vorderhaube (8) des Fahrzeugs (1) unterhalb der Frontscheibe des Mittelkörpers angebracht ist und die Schwenkbewegung des Mittelkörpers eingeleitet wird, wenn die Seitenwände (5) in ihrer vollständig angehobenen Lage sind.

## Revendications

1. Véhicule automobile (1) sur roues ayant :
une structure (2) de carrosserie de véhicule procurant un compartiment (3) de conducteur et comprenant une ouverture (4) dans le compartiment,
une carrosserie centrale dimensionnée de manière coopérative et configurée pour fermer ladite ouverture (4), ladite ouverture (4) étant formée par des parties de la structure (2) de carrosserie,
**caractérisé en ce que**
ladite carrosserie centrale comprend un flanc (5) disposé de manière articulée à des parties de ladite carrosserie centrale par l'ouverture (4), le long d'une extension dans le sens de la longueur de ladite structure (2) de carrosserie de véhicule, et
ladite carrosserie centrale est disposée de manière pivotale par rapport à un axe s'étendant dans la direction transversale de ladite structure de carrosserie de véhicule, pour permettre un mouvement pivotal vers le haut et en s'éloignant de ladite ouverture (4) pendant le mouvement d'ouverture.

2. Véhicule (1) selon la revendication 1, dans lequel ledit flanc articulé (5) du véhicule présente une surface intérieure disposée pour suivre une surface extérieure de ladite carrosserie centrale, en rapport de surface pendant une partie du mouvement d'ouverture.

3. Véhicule (1) selon l'une quelconque des revendications 1 ou 2, dans lequel ledit flanc articulé (5) du véhicule (1) est attaché de manière pivotale à un dispositif de taraud, ledit dispositif de taraud étant à son tour attaché de manière pivotale à ladite carrosserie centrale.

4. Véhicule (1) selon l'une quelconque des revendications 1 à 3, dans lequel ledit flanc articulé (5) du véhicule (1) est attaché de manière pivotale, par l'intermédiaire d'un dispositif de taraud, à une structure (10) de poutre sous une fenêtre (9) de côté de ladite carrosserie centrale.

5. Véhicule (1) selon l'une quelconque des revendications 1 à 4, dans lequel ladite carrosserie centrale du véhicule (1) comprend une partie (6) de toit et un flanc (5) de chaque côté de ladite partie (6) de toit, chacun desdits flancs (5) formant une structure ressemblant à une porte.

6. Véhicule (1) selon l'une quelconque des revendications 1 à 5, dans lequel ladite carrosserie centrale du véhicule (1) est attachée de manière pivotale par la partie arrière d'un capot avant (8) du véhicule (1), sous la fenêtre avant de ladite carrosserie centrale.

7. Véhicule (1) selon l'une quelconque des revendications 1 à 6, dans lequel ladite carrosserie centrale du véhicule (1) est maintenue par un moyen de polarisation magnétique dans sa condition fermée, de manière à soutenir le mouvement d'ouverture.

8. Véhicule (1) selon l'une quelconque des revendications 1 à 7, dans lequel le mouvement d'ouverture de ladite carrosserie centrale du véhicule (1) est actionné par un moteur électrique ou un appareillage hydraulique.

9. Procédé permettant l'ouverture et la fermeture d'un véhicule automobile (1) sur roues ayant une structure (2) de carrosserie de véhicule procurant un compartiment (3) de conducteur et comprenant une ouverture (4) dans le compartiment,
une carrosserie centrale dimensionnée de manière coopérative et configurée pour fermer ladite ouverture (4), ladite ouverture (4) étant formée par des parties de la structure (2) de carrosserie
**caractérisé par** les étapes consistant à
manoeuvrer un flanc (5) disposé de manière articulée à des parties de ladite carrosserie centrale par l'ouverture (4), le long d'une extension dans le sens de la longueur de ladite structure (2) de carrosserie de véhicule, et
faire pivoter ladite carrosserie centrale par rapport à un axe s'étendant dans la direction transversale de ladite structure de carrosserie de véhicule pour permettre un mouvement pivotal vers le haut et en s'éloignant de ladite ouverture (4) pendant le mouvement d'ouverture.

10. Procédé selon la revendication (9), dans lequel ladite carrosserie centrale est attachée de manière pivotale par la partie arrière d'un capot avant (8) du véhicule (1) sous la fenêtre avant de ladite carrosserie centrale et le mouvement pivotal de ladite carrosserie centrale est initié lorsque lesdits flancs (5) sont dans leur position entièrement relevée.
